(19) Europäisches Patentamt
European Patent Office
Office européen des brevets

(11) **EP 2 103 964 B1**

(12) **FASCICULE DE BREVET EUROPEEN**

(45) Date de publication et mention
de la délivrance du brevet:
**29.12.2010 Bulletin 2010/52**

(51) Int Cl.:
***G01V 11/00*** *(2006.01)*

(21) Numéro de dépôt: **09290172.7**

(22) Date de dépôt: **10.03.2009**

(54) **Procédé d'estimation de la densité de fractures dans un milieu rocheux**

Abschätzverfahren der Dichte der Risse in einem felsigen Milieu

Method for calculating the density of the fractures in a rocky medium

(84) Etats contractants désignés:
**GB NO**

(30) Priorité: **21.03.2008 FR 0801588**

(43) Date de publication de la demande:
**23.09.2009 Bulletin 2009/39**

(73) Titulaire: **IFP Energies nouvelles**
**92852 Rueil-Malmaison Cedex (FR)**

(72) Inventeurs:
• **Barthelemy, Jean-François**
**94160 Saint-Mandé (FR)**
• **Guiton, Martin**
**78000 Versailles (FR)**
• **Daniel, Jean-Marc**
**78400 Chatou (FR)**

(56) Documents cités:
**US-A1- 2008 062 814    US-B1- 6 266 618**

• **FITZGERALD E M ET AL: "Fracture-frequency prediction from borehole wireline logs using artificial neural networks" GEOPHYSICAL PROSPECTING NOVEMBER 1999 BLACKWELL PUBLISHING LTD. GB, vol. 47, no. 6, novembre 1999 (1999-11), pages 1031-1044, XP002513477**
• **MAULDON M ET AL: "Fracture Sampling on a Cylinder: From Scanlines to Boreholes and Tunnels" ROCK MECHANICS AND ROCK ENGINEERING, SPRINGER-VERLAG, VI, vol. 30, no. 3, 1 January 1997 (1997-01-01), pages 129-144, XP007912831 ISSN: 1434-453X**

**Description**

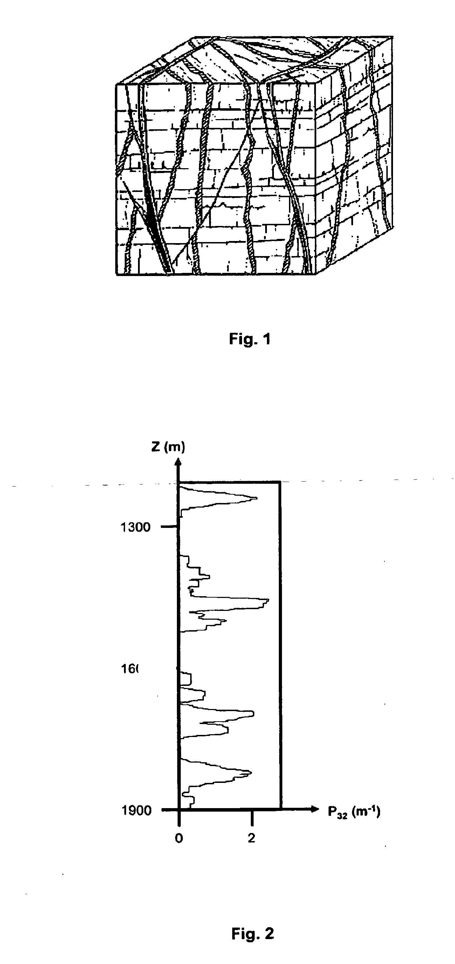

La présente invention concerne le domaine de la caractérisation des milieux poreux fracturés (figure 1), c'est-à-dire les milieux dans lesquels la présence de fractures joue un rôle important sur les propriétés physiques du milieu.

En particulier, l'invention concerne un procédé pour construire une diagraphie de densité de fractures (figure 2) d'une formation poreuse traversée par un ensemble de fractures et au moins un forage.

Les fractures contribuent à diminuer les capacités de résistance de la roche et peuvent augmenter significativement la facilité de circulation des fluides (perméabilité moyenne) par rapport aux propriétés de la roche saine. L'étude de ces milieux nécessite la plupart du temps d'obtenir des informations sur la densité des fractures qu'ils contiennent. Par exemple, la connaissance de la densité 3D de fractures dans une roche est cruciale dans le domaine-du génie civil, pour prédire le comportement de la roche lors de la construction d'un ouvrage tel qu'un tunnel. Cette densité est aussi fondamentale pour estimer les propriétés hydrodynamiques moyennes des roches affectées par un réseau de fractures. En complément de la distribution en orientation et en longueur, elle influence directement la connectivité des fractures. Dans le cas de l'exploration et la production pétrolière, elle définit la taille des blocs de matrice saine contenant l'huile en place, et contrôle la connexion entre ces blocs et un puits producteur (on injecteur dans le cas de récupération assistée ou de la séquestration du CO2). La connaissance du réseau de fractures constitue une information également importante dans le domaine de l'hydrogéologie pour caractériser les aquifères.

La compréhension, voire la prédiction, des écoulements dans les réservoirs fracturés fait l'objet de modèles numériques à l'échelle du réservoir ou au voisinage des puits. Afin de réaliser des simulations à l'aide de logiciels, appelés simulateur d'écoulement, il est nécessaire de construire :

- un modèle structural avec les géométries des couches de roches et des grandes failles qui les découpent,

- un modèle lithologique généralement construit à l'aide d'outils géostatistiques ou à partir de simulations numériques du transport de sédiment, en attribuant à chaque lithologie des propriétés relatives aux écoulements,

- pour le cas des réservoirs fracturés, un modèle de la distribution et des propriétés des fractures au sein d'un volume élémentaire représentatif du réservoir.

Les propriétés statistiques des fractures et les propriétés d'écoulement d'un volume élémentaire homogène équivalent au volume de roches fracturées sont les paramètres d'entrée des modèles d'écoulement dans les réservoirs.

La caractérisation des fractures en termes d'orientation, de densité, et de propriétés hydrodynamiques, est une étape indispensable à toute modélisation des écoulements dans les réservoirs. Les formations réservoirs couvrent des dizaines de kilomètres latéralement, et se situe à des profondeurs de l'ordre de la centaine de mètres pour les aquifères, et généralement de plusieurs kilomètres pour les réservoirs d'hydrocarbures. Les seules données d'observations des fractures disponibles proviennent des puits (carotte ou imageries). Plus précisément, ces données concernent l'intersection des fractures avec les parois des puits, et n'échantillonnent donc que faiblement les réservoirs.

**État de la technique**

Pour estimer la densité, une première approche consiste à compter le nombre de fractures par unité de longueur de puits, que l'on note densité $P_{10}$. Un biais de mesure connu est que les fractures qui sont plus ou moins parallèles aux puits ont peu de chance de l'intercepter par rapport à celles qui lui sont fortement obliques. On corrige alors ce biais en pondérant chaque intersection de fracture par une fonction qui diminue avec l'obliquité des fractures par rapport au puits ("Terzaghi R.D. Sources of error in joint surveys. Géotechnique, 15: 287-304."). Un inconvénient important de cette méthode est qu'elle ne tient pas compte de l'influence de la distribution de longueur sur le facteur de correction, qui joue un rôle important dès que la taille des fractures est comparable ou inférieure au rayon du puits, et que leur intersection avec la paroi du puits s'exprime fréquemment par des traces partielles (fracture ne coupant pas complètement la section transverse du puits) ("Mauldon, M. and Mauldon, J. G. Fracture Sampling on a Cylinder: From Scanlines to Boreholes and Tunnels. Rock Mech. Rock Engng. 30(3) : 129-144, 1997.").

Une seconde approche consiste à estimer la densité tridimensionnelle, notée densité $P_{32}$, à l'intérieur d'un intervalle de carotte de puits, et à la considérer comme représentative de la densité $P_{32}$ dans un volume de réservoir. De manière équivalente, ("Narr W. Estimating Average Fracture Spacing in Subsurface Rock, AAPG Bulletin, 90, 10: 1565-1586, 1996."). en proposant une ouverture constante des fractures, on calcule un rapport entre le volume d'un intervalle de carotte et la somme des volumes à l'intérieur des fractures et on suppose ce rapport égal à sa mesure dans un volume de réservoir.

Une troisième méthode consiste à :

1. générer des modèles de réseaux discrets de fractures en faisant varier la densité $P_{32}$ pour des lois d'orientation et de longueur données,

2. calculer l'intersection de ces modèles avec l'intervalle de puits pour obtenir les densités $P_{10}$, correspondantes,

3. rechercher, à partir du nuage de points ($P_{10}$,$P_{32}$) obtenus la courbe de régression linéaire satisfaisant au mieux (au sens des moindres carrés) la relation entre $P_{32}$ et $P_{10}$.

Cette relation linéaire est ensuite utilisée pour fournir une valeur de $P_{32}$ pour chaque observation de $P_{10}$. Cette méthode, contrairement aux précédentes, s'apparente à une méthode de Monte-Carlo et présente l'inconvénient d'un temps de calcul important. Toutefois, en faisant appel à des réseaux générés à l'aide de lois statistiques fournies par l'utilisateur, elle tient implicitement compte des biais dus aux distributions d'orientation et de longueur. Elle a notamment été appliquée dans ("Starzec P. and C-F. Tsang. Use of fracture-intersection density for predicting the volume of unstable blocks in underground openings", International Journal of Rock Mechanics & Mining Sciences, 39: 807-813, 2002.") pour établir d'une part une relation entre la densité $P_{32}$ et la densité $P_{10}$ et d'autre part une relation entre la densité $P_{32}$ et le nombre de fractures qui ont une intersection avec une surface plane.

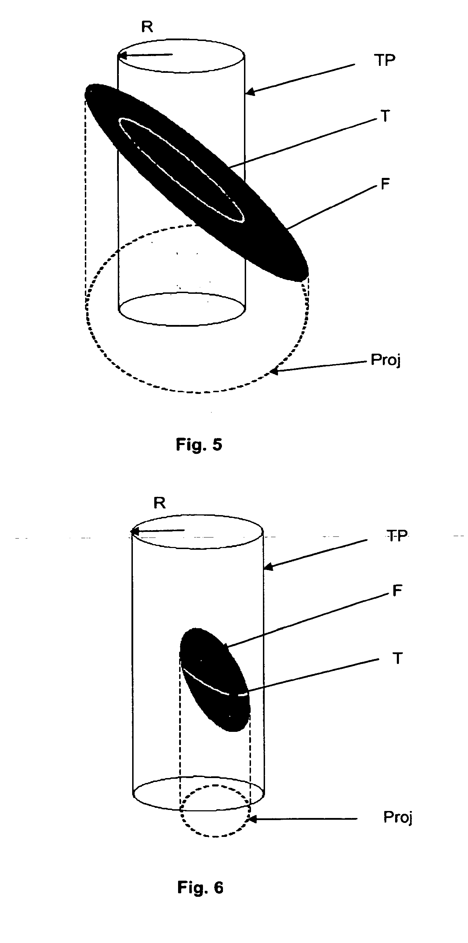

En raison du faible échantillonnage du réservoir par les intervalles de mesure sur le puits, l'incertitude sur la valeur possible de $P_{32}$ connaissant $P_{10}$ peut s'avérer grande (cf. fig. 5). Or les trois méthodologies présentées ci-dessus ne proposent qu'une estimation d'une densité moyenne $P_{32}$ pour chaque observation de $P_{10}$ et ne fournissent pas l'incertitude associée à cette valeur.

L'objet de l'invention concerne un procédé alternatif pour construire une diagraphie de densité de fractures d'une formation poreuse, à partir d'observation des intersections de traces de fractures sur les parois d'un forage traversant le milieu. Le procédé s'affranchit des difficultés de l'art antérieur en estimant, par une formule analytique, une loi de probabilité conditionnelle de la densité tridimensionnelle de fractures sachant le nombre d'intersections.

**Le procédé selon l'invention**

L'objet de l'invention concerne un procédé de construction d'une diagraphie de densité de fractures d'une formation poreuse traversée par un ensemble de fractures et au moins un forage. Le procédé comporte les étapes suivantes :

a) on mesure un nombre $N$ d'intersections entre des fractures et ledit forage sur un tronçon du forage de longueur $L$ situé à une profondeur $d$, à partir d'observations de la paroi dudit tronçon ;

b) on estime une loi de probabilité conditionnelle de la densité tridimensionnelle de fractures sachant le nombre $N$ d'intersections, ladite densité tridimensionnelle de fractures correspondant à une somme de surfaces de fractures par unité de volume ;

c) on détermine une valeur de densité tridimensionnelle de fractures à la profondeur $d$, en calculant la moyenne de ladite loi de probabilité conditionnelle ;

d) on construit une diagraphie de densité tridimensionnelle de fractures, en réitérant les étapes a), b), et c) pour différentes profondeurs.

Selon l'invention, on peut de façon avantageuse associer à la diagraphie de densité de fractures tridimensionnelle au moins une diagraphie d'incertitude de densité tridimensionnelle de fractures, en calculant des quantiles de la loi de probabilité conditionnelle.

Pour estimer la loi de probabilité conditionnelle, on peut considérer que les fractures ont des barycentres distribués dans la formation selon une loi de Poisson. On peut alors exprimer la loi de probabilité conditionnelle en fonction des paramètres suivants : une loi de probabilité d'un angle défini entre une fracture et le forage, le nombre $N$ d'intersections et la longueur $L$ du tronçon.

De plus, on peut considérer que le forage a une section transverse négligeable par rapport à l'extension des fractures, et estimer alors la loi de probabilité conditionnelle par une loi Gamma de paramètres $N+1$ et $\kappa_o L$, avec $\kappa_o$ la moyenne de l'angle, calculé à partir de la loi de probabilité de l'angle.

Selon un autre mode de réalisation, on peut considérer que les fractures ont une forme elliptique. On peut alors définir une loi de probabilité de longueur des fractures, et une loi de probabilité de largeur des fractures, puis estimer la fonction de probabilité conditionnelle en prenant en compte ces lois de probabilité des longueurs et largeurs des fractures, et en considérant que le tronçon de forage considéré est cylindrique.

Le nombre d'intersections *N* peut alors être remplacé par un nombre d'intersections partielles, correspondant aux fractures ne coupant pas complètement la section transverse du forage.

L'invention concerne également un procédé pour optimiser l'exploitation d'une formation souterraine traversée par un ensemble de fractures et au moins un forage, dans lequel :

- on construit une diagraphie de densité tridimensionnelle de fractures et au moins une diagraphie d'incertitude de densité tridimensionnelle de fractures, au moyen du procédé de construction de diagraphie selon l'invention ;

- on construit une carte en trois dimensions de densité de fracturation et une carte d'incertitude sur des valeurs de densité de fracturation, à partir des diagraphies ; et

- on optimise l'exploitation de la formation souterraine en tenant compte des cartes de densité et des incertitudes.

D'autres caractéristiques et avantages du procédé selon l'invention, apparaîtront à la lecture de la description ci-après d'exemples non limitatifs de réalisations, en se référant aux figures annexées et décrites ci-après.

**Présentation succincte des figures**

- La figure 1 illustre un milieu poreux fracturé.

- La figure 2 représente une diagraphie de densité tridimensionnelle de fractures.

- La figure 3 schématise les étapes du procédé selon l'invention.

- La figure 4 illustre l'acquisition d'une image de la paroi d'un forage au moyen d'un outil de diagraphie de fracture.

- La figure 5 est un schéma d'une trace pleine.

- La figure 6 est un schéma d'une trace partielle.

- La figure 7 est un schéma d'une trace double. L'intersection de la fracture et de la paroi du puits correspond à deux arcs non connexes.

- La figure 8 représente la densité $P_{32}$, l'espérance (*ES*) et les déciles à 10% ($q_{10}$) et 90% ($q_{90}$) de la densité $P_{32}$ en fonction de la densité $P_{10}$, avec l'hypothèse que les fractures sont très grandes devant le rayon du puits, ce dernier étant alors considéré comme une ligne 1 D.

- La figure 9 représente la densité $P_{32}$, l'espérance (*ES*) et les déciles à 10% ($q_{10}$) et 90% ($q_{90}$) de la densité $P_{32}$ en fonction de la densité $P_{10}$, en utilisant la formule tenant compte de la distribution de longueur des fractures et donc de la présence de traces partielles.

En revanche, la probabilité d'avoir des traces doubles est ignorée, ce qui signifie que les traces sont supposées provenir de fractures toutes différentes.

- La figure 10 représente la densité $P_{32}$, l'espérance (*ES*) et les déciles à 10% ($q_{10}$) et 90% ($q_{90}$) de la densité $P_{32}$ en fonction de la densité $P_{10}$, en utilisant la formule tenant compte de la distribution de longueur des fractures ainsi que de la probabilité de présence de traces doubles.

- La figure 11 illustre la loi de probabilité de la densité $P_{32}$ sans tenir compte des traces doubles (en pointillés) et avec la correction due aux traces doubles en (trait plein), ainsi que l'histogramme des valeurs de $P_{32}$ issues de tirages de réseaux discrets de fractures correspondant à une valeur donnée de $P_{10}$.

**Description détaillée du procédé**

L'invention concerne un procédé pour construire une diagraphie de densité de fractures d'une formation poreuse traversée par un ensemble de fractures. Selon l'invention, on estime la densité tridimensionnelle de fractures dans un milieu rocheux fracturé, à partir de mesures réalisées au sein d'un forage traversant la formation.

On appelle diagraphie, un enregistrement, sous forme de courbe, d'une propriété d'une formation en fonction de la profondeur de forage. La figure 2 illustre une diagraphie de densité tridimensionnelle ($P_{32}$) de fracture en fonction de la profondeur Z au sein d'un forage traversant une formation souterraine.

On appelle forage, un trou réalisé dans la formation, en vue du repérage des conditions géologiques de la formation. Il peut s'agir d'un puits ou d'une galerie par exemple.

On appelle fracture, une discontinuité plane, de très faible épaisseur par rapport à son extension, et qui représente un plan de rupture d'une roche d'une formation poreuse.

Il existe deux types de densité de fractures. L'une, notée $P_{10}$, correspond à la densité linéique de fracturation. Elle mesure le nombre de fractures observées par unité de longueur d'un puits ou d'une galerie. Elle se calcule à partir d'analyse visuelle de carotte ou par imagerie à partir de mesures diagraphiques, appelées diagraphie de fracture, telles que les logs de résistivité électrique (FMI/FMS), ou les logs acoustiques (UBI). Ces techniques permettent de déterminer sur une portion *L* du puits, appelée aussi « longueur d'échantillonnage », un nombre N de traces de fractures. Ainsi :

$$P_{10} = \frac{N}{L}$$

La seconde densité, notée $P_{32}$, correspond à la densité tridimensionnelle de fracturation. Elle correspond à la somme des surfaces des fractures par unité de volume :

$$P_{32} = S(m^2)/m^3$$

Il n'y a pas de méthodes simples pour déterminer ce rapport par une simple observation.

L'invention permet d'estimer cette densité tridimensionnelle de fractures dans un milieu rocheux fracturé, à partir de mesures réalisées au sein d'un forage dans le milieu. Elle permet en plus d'obtenir des incertitudes sur cette estimation.

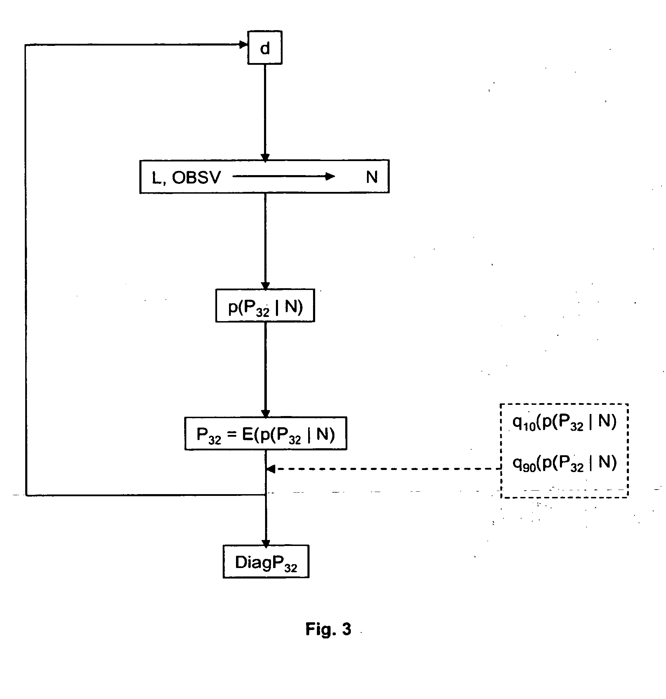

La figure 3 illustre les différentes étapes du procédé selon l'invention. Il comporte les étapes suivantes :

a) on mesure un nombre *N* d'intersections entre des fractures et le forage sur un tronçon de longueur *L* du forage et à une profondeur *d*, à partir d'observations de la paroi du tronçon à la profondeur *d* ;

b) on estime une loi de probabilité conditionnelle de la densité tridimensionnelle de fractures sachant le nombre *N* d'intersections ;

c) on détermine une valeur de densité tridimensionnelle de fractures, en calculant la moyenne de la loi de probabilité conditionnelle ;

d) on construit une diagraphie de densité de fractures tridimensionnelle, en réitérant les étapes a), b) et c).

La méthode présentée ici concerne tous les échantillonnages de milieux fracturés par des forages (puits, tunnels, galerie...). Elle peut donc être utilisée dans le domaine pétrolier, qui est pris comme exemple dans la description suivante en faisant référence à des données de puits, aussi bien qu'en génie civil.

<u>1- Mesure de la densité P$_{10}$</u>

En observant les traces de fractures sur les parois du forage, au niveau du tronçon de longueur *L*, on mesure le nombre *N* d'intersections entre des fractures et ce forage sur ce tronçon.

Pour ce faire, on peut observer directement les traces de fractures sur la paroi. Ceci est le cas notamment dans le cadre d'une galerie, où l'on peut facilement observer l'intérieur du forage.

On peut également réaliser un carottage de la formation lors du forage, et ensuite observer les traces de fractures sur les surfaces externes des carottes. Ceci est le cas notamment dans le cadre de forage de puits. En effet, les surfaces externes des carottes représentent un équivalent de la paroi interne du forage. Il s'agit de son pendant.

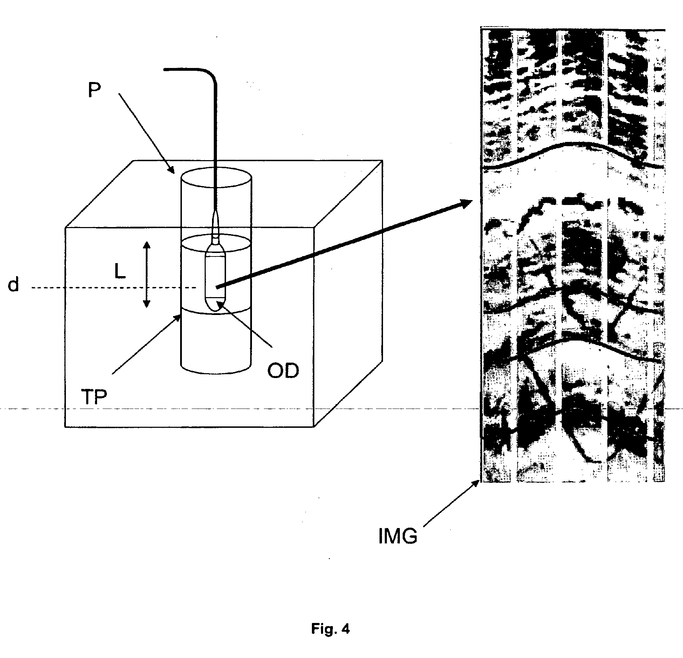

Enfin, comme illustré sur la figure 4, on peut également introduire un outil de diagraphie (*OD*) à une profondeur *d* au sein du forage *P* (galerie étroite ou puits), de façon à construire une image (*IMG*) de la paroi du tronçon de longueur *L* du forage à la profondeur *d*. Ce type de mesures diagraphiques, appelées diagraphie de fracture, correspond classiquement aux logs de résistivité électrique (FMI/FMS), ou aux logs acoustiques (UBI). Ensuite, une analyse de l'image ainsi produite, permet de déterminer *N,* sur une longueur *L,* et à la profondeur *d*.

2- Estimation de la loi de probabilité conditionnelle : $p(P_{32}|N)$

Au cours de cette étape, on estime une loi de probabilité conditionnelle de la densité tridimensionnelle de fractures sachant le nombre *N* d'intersections sur un tronçon de forage de longueur *L*.

Une loi de probabilité, ou distribution, décrit les répartitions typiques des valeurs que peut prendre un phénomène aléatoire. On peut utiliser la fonction de répartition ou la densité (densité de probabilité) pour caractériser une telle loi.

Pour fournir une formulation analytique de cette loi de probabilité conditionnelle, on peut appliquer la méthode suivante.

On considère comme hypothèses générales que les fractures sont planes, et que leurs barycentres sont distribués selon un processus de Poisson.

Selon un mode de réalisation, on considère que la taille des fractures est très grande devant la taille d'ouverture, ou section transverse, du forage. On considère que cette condition est remplie lorsque les intersections entre fractures et forage ne correspondent, à l'échelle du forage, qu'à des traces pleines. On appelle « trace pleine » une trace de fracture parcourant le tour du forage, comme illustré sur la figure 5, qui montre le tronçon de forage (*TP*), la fracture (*F*) et la trace (*T*). Cette hypothèse implique que le tronçon de forage peut être considéré comme un segment.

On peut alors exprimer la loi de probabilité conditionnelle en fonction des paramètres suivants :

- longueur *L* du tronçon de forage étudié,

- nombre *N* de traces observées,

- loi de probabilité d'un angle défini entre une fracture et le forage. On peut par exemple considérer l'angle θ, compris entre 0° et 90°, formé par la direction normale au plan de la fracture et la direction du forage. Cette loi de probabilité angulaire n'est pas explicitement précisée : elle peut être a priori quelconque. De même, la forme géométrique des fractures n'est pas spécifiée.

On montre alors, que la loi de probabilité conditionnelle de la densité tridimensionnelle de fractures sachant le nombre *N* d'intersections, notée $p(P_{32}|N)$, est une loi Gamma de paramètres *N*+1 et $\kappa_o L$ :

$$p(P_{32}/N) = e^{-P_{32}\kappa_o L} \frac{P_{32}{}^N (\kappa_o L)^{N+1}}{N!} = \Gamma_{N+1,\kappa_o L}(P_{32})$$

Avec : $\kappa_o = E(\cos\theta)$.
La plupart du temps cette quantité $\kappa_o$ n'est accessible que numériquement. Elle est ainsi effectuée par intégration numérique par des méthodes classiques bien connues des spécialistes (quadrature gaussienne, méthode des trapèzes, de Simpson etc.).

3- Construction d'une diagraphie de densité tridimensionnelle de fracture $\underline{P_{32}}$

A partir de cette loi de probabilité conditionnelle $p(P_{32}|N)$, estimée à la profondeur *d*, on détermine une valeur de densité tridimensionnelle de fractures, à la profondeur *d*.

Pour ce faire on calcule l'espérance de cette loi de probabilité conditionnelle :

$$E(P_{32}/N) = \frac{N+1}{\kappa_o L}$$

En réitérant pour d'autres profondeurs les étapes 1 et 3 précédemment décrites, on obtient un ensemble de couples densité tridimensionnelle/profondeur. Ces couples nous permettent de construire une courbe, appelée diagraphie (ou log) de densité tridimensionnelle de fracture. Une telle diagraphie est représentée figure 2.

Selon un mode de réalisation, connaissant la distribution complète de la densité tridimensionnelle de fractures $p(P_{32}|N)$, on peut également déterminer le mode et l'écart type de cette densité de fracture :

$$Mode(P_{32}/N) = \frac{N}{\kappa_o L}$$

$$\sqrt{Var(P_{32}/N)} = \frac{\sqrt{N+1}}{\kappa_o L}$$

On peut également calculer la fonction de répartition de cette loi de probabilité conditionnelle. Celle-ci vaut :

$$F(P_{32}/N) = \frac{\gamma(N+1, P_{32}\kappa_o L)}{N!} \quad avec \quad \gamma(a,x) = \int_{t=0}^{x} e^{-t} t^{a-1} dt$$

où $\gamma$ est la fonction gamma incomplète dont il est possible de trouver des tabulations dans des bibliothèques de calcul scientifique.

Enfin, on peut également calculer les quantiles normalisés de cette loi de probabilité conditionnelle, c'est-à-dire les scalaires $q_\alpha$ tels que

$$F\left(\frac{q_\alpha}{\kappa_o L}\bigg/N\right) = P\left(P_{32} \le \frac{q_\alpha}{\kappa_o L}\bigg/N\right) = \alpha(\%)$$

Ces scalaire peuvent être obtenus par résolution de $\dfrac{\gamma(N+1, q_\alpha)}{N!} = \alpha(\%)$

Cette résolution peut s'effectuer par un algorithme de Newton-Raphson, une dichotomie ou par recours à des tabulations existant dans certaines bibliothèques.

On peut alors associer à la diagraphie de densité tridimensionnelle de fracture une incertitude sur la valeur de densité, en associant à chaque valeur de densité une ou plusieurs valeurs caractéristiques de la distribution, comme les quantiles $q_{10}$ et $q_{90}$.

**Variantes**

Selon un mode particulier de réalisation, on prend en compte le fait que toutes les intersections entre fractures et forage ne correspondent pas, à l'échelle du forage, à des traces pleines.

On calcule alors un ratio Pf entre le nombre de traces pleines et l'ensemble des traces observées. Ce ratio est donc compris entre 0 et 1.

<u>Pf = 1</u>

Si ce ratio est sensiblement égal à 1, on peut utiliser la méthode précédemment décrite pour estimer la loi de probabilité conditionnelle $p(P_{32}|N)$.

<u>0,9 ≤ Pf < 1</u>

Si ce ratio est supérieur ou égal à 0,9 tout en étant différent de 1, on peut utiliser la méthode précédemment décrite pour estimer la loi de probabilité conditionnelle $p(P_{32}|N)$.

Cependant, on peut y ajouter une correction liée au fait que Pf≠1. Cette correction consiste à remplacer le nombre N par le nombre de traces pleines uniquement. Puis, on corrige le facteur $\kappa_o$ en le remplaçant par le facteur $\kappa_f$ ainsi défini :

$$\kappa_f = \kappa_0 \cdot \frac{1}{2}(1 + Pf)$$

Pf < 0,9

Si ce ratio est inférieur à 0,9, alors on peut utiliser la méthode suivante, dans laquelle on considère les deux hypothèses suivantes :

i. les fractures ont une forme elliptique (figures 5, 6 et 7).

ii. le tronçon de forage considéré est cylindrique, de rayon $R$ (figures 5, 6 et 7).

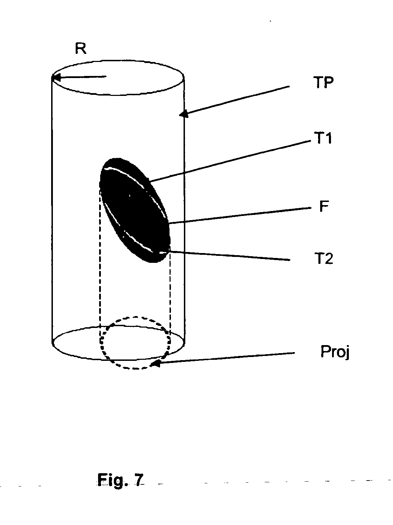

Le forage est considéré comme un objet cylindrique et non plus comme un segment. Le rayon du forage est non négligeable devant la taille des fractures. De plus, les traces (T) des fractures (F) sur le forage peuvent être, selon les cas, pleines (figure 5), partielles (figure 6) ou doubles (figure 7). Les données d'entrée nécessaires à l'estimation de la loi de probabilité conditionnelle sont :

- la longueur $L$ du tronçon de forage étudié.

- le nombre $N$ de traces observées. En fonction des données disponibles, il est possible d'envisager la procédure qui suit en comptabilisant toutes les traces, qu'elles soient pleines ou partielles, ou de ne comptabiliser que les traces pleines. La première situation a l'avantage d'avoir accès à un échantillonnage plus important tandis que la seconde permet de simplifier l'analyse des observations de la paroi du forage.

- le rayon $R$ de la section transverse du forage supposée circulaire.

- la loi de probabilité caractérisant l'orientation des fractures supposées planes et elliptiques. Cette loi porte donc sur un trièdre dans l'espace (ou trois angles d'Euler) : le premier vecteur désigne la normale à la fracture et les deux autres précisent l'orientation des grand et petit axes dans le plan de la fracture (on peut utiliser une loi portant uniquement sur la normale, telle qu'une loi normale bivariée, ou une loi de Kent et des hypothèses déterministes sur l'orientation dans le plan).

- une loi de probabilité de la taille des fractures supposées planes et elliptiques, c'est-à-dire une loi portant sur le couple (petit rayon, grand rayon) de l'ellipse.

Dans le but de déterminer la loi de probabilité conditionnelle, on réalise alors les étapes suivantes:

i) Calcul de la surface moyenne des fractures E(S)

Il peut s'agir ici d'une quantité facilement accessible en fonction de la loi choisie pour le couple de rayons de l'ellipse (si, par exemple, on choisit un rapport constant entre les deux rayons et que la loi du rayon majeur permet un calcul analytique du moment d'ordre 2 i.e. l'espérance du carré du rayon). Dans le cas où une solution analytique n'est pas disponible, on peut recourir à une intégration numérique (quadrature gaussienne, méthode des trapèzes, de Simpson etc.).

ii) Calcul des rayons de la projection d'une ellipse (notée *Proj* sur les figures 5, 6 et 7) sur le plan orthogonal à l'axe du forage

Cette étape consiste à calculer analytiquement la projection d'une ellipse définie par son trièdre d'orientation et ses deux rayons sur le plan orthogonal à l'axe du forage. L'intérêt de ce calcul est de déterminer les rayons de l'ellipse projetée en fonctions des rayons et des angles d'Euler de l'ellipse initiale.

iii) Calcul des espérances de surfaces utiles

Considérons l'ellipse projetée sur le plan orthogonal à l'axe du forage définie à l'étape précédente et la section circulaire du forage sur ce plan, on définit:

- σf = la surface du domaine auquel doit appartenir le centre de l'ellipse de sorte que celle-ci coupe le cercle selon une trace pleine,

- σ = la surface du domaine auquel doit appartenir le centre de l'ellipse de sorte que celle-ci coupe le cercle,

- σ2 = la surface du domaine auquel doit appartenir le centre de l'ellipse de sorte que celle-ci coupe le cercle selon deux traces distinctes (*T1* et *T2*, figure 7). En fonction des rayons de l'ellipse et du cercle, cette surface peut éventuellement être nulle,

- σ1 = σ-σ2 est la surface du domaine auquel doit appartenir le centre de l'ellipse de sorte que celle-ci coupe le cercle selon une unique trace.

On montre, par des raisonnements de géométrie différentielle, que les relations liant ces surfaces aux rayons de l'ellipse projetée s'expriment sous forme de fonctions analytiques et d'intégrales elliptiques tabulées dans les bibliothèques scientifiques. Ainsi, en combinant ces calculs et ceux de l'étape précédente, on trouve la dépendance de ces surfaces avec les rayons et angles d'Euler de l'ellipse initiale dans $R^3$. Il est alors possible, par intégration numérique, de calculer les espérances de ces surfaces lorsque l'ellipse modélisant la fracture suit les lois statistiques d'orientation et de longueurs définies initialement par l'utilisateur.

iv) Calcul des ratios utiles.

Les étapes précédentes permettent de calculer les ratios suivants:

- $\kappa f = E(\sigma f)/E(S)$ utilisé si les seules traces comptabilisées sont les traces pleines

- $\kappa = E(\sigma)/E(S)$ utilisé si les traces comptabilisées incluent des traces partielles

- $r = E(\sigma 2)/E(\sigma)$ est la probabilité pour une fracture coupant le forage de le couper selon deux traces distinctes.

v) Expression de la loi de probabilité conditionnelle $p(P_{32}|N)$

Plusieurs cas de figure se présentent selon la nature des traces prises en compte (partielles ou pleines).
Dans le cas de traces pleines, les expressions à utiliser sont rigoureusement identiques à celles précédemment exposées, en remplaçant néanmoins $\kappa_o$ par $\kappa_f$.
Dans le cas de traces pleines et partielles, utiliser les mêmes expressions avec $\kappa$ à la place de $\kappa_o$ revient à comptabiliser les fractures (et non les traces). Or il n'est pas possible, à l'observation, de distinguer les traces doubles des traces simples et donc de remonter au nombre de fractures coupant le puits. Ainsi le calcul précédent en remplaçant $\kappa_o$ par $\kappa$ n'est valable que lorsque la probabilité d'occurrence des traces doubles est négligeable et donc que le nombre de traces est en bijection avec le nombre de fractures coupant le puits. Lorsque "r" n'est pas nul, on montre que ce sont les expressions suivantes qu'il faut utiliser:

$$p(P_{32}/N) = \frac{1+r}{1-(-r)^{N+1}} \sum_{i=0}^{\lfloor N/2 \rfloor} B_{r,N-i}(i)\Gamma_{N-i+1,\kappa L}(P_{32}) \quad avec \; B_{r,n}(k) = C_n^k r^k (1-r)^{n-k} \; et \; \Gamma_{n,\lambda}(p) = \frac{e^{-\lambda p}\lambda^n p^{n-1}}{(n-1)!}$$

A partir de cette loi de probabilité conditionnelle $p(P_{32}|N)$, estimée à la profondeur *d*, on détermine une valeur de densité tridimensionnelle de fractures, à la profondeur *d*. Pour ce faire on calcule l'espérance de cette loi de probabilité conditionnelle :

$$E(P_{32}/N) = \frac{N+1-f(N,r)}{\kappa L} \quad et \quad \sqrt{Var(P_{32}/N)} = \frac{\sqrt{N+1-f(N,r)}}{\kappa L}$$

avec :

$$f(N,r) = \frac{r\left[N(1+r)\left(1+(-r)^N\right)-(1-r)\left(1-(-r)^N\right)\right]}{(1+r)^2\left(1-(-r)^{N+1}\right)}$$

On peut également, associer à la diagraphie de densité une incertitude en calculant la fonction de répartition et les quantiles. Pour les cas relevant de la correction due aux traces doubles ($r\neq 0$), la fonction de répartition se formule de la façon suivante :

$$F(P_{32}/N) = \frac{1+r}{1-(-r)^{N+1}} \sum_{i=0}^{\lfloor N/2 \rfloor} \frac{B_{r,N-i}(i)}{(N-i)!} \gamma(N-i+1, P_{32}\kappa L)$$

Les quantiles normalisés $q_\alpha$ peuvent être calculés par exemple par une méthode de Newton-Raphson en notant bien que la dérivée de $F(P_{32}|N)$ n'est autre que la loi $p(P_{32}|N)$.

Enfin, selon un autre mode de réalisation, on peut travailler par familles de fractures, classées en fonction de leur direction.

**Exemple : le rayon du forage est non négligeable devant la taille des fractures**

Dans le cadre de cet exemple, on se propose de confronter la loi de probabilité conditionnelle $p(P_{32}|N)$ estimée, à un grand nombre de tirages de réseaux discrets de fractures elliptiques dont les lois d'orientation et de longueur sont telles que la probabilité d'avoir des traces doubles est non nulle. Les données numériques et hypothèses choisies sont les suivantes :

- 2000 réseaux générés

- L=20m

- R=0.1m

- le grand rayon des fractures elliptiques suit une loi lognormale de moyenne 1m et d'écart type 0.1m, et le rapport d'aspect (rapport du petit sur le grand rayon) est constant égal à 0.3

- la loi d'orientation de la normale est du type normal bivarié ("Marcotte H. et Henry E. Automatic joint set clustering using a mixture of bivariate normal distributions. Int. J. Rock Mech. Min. Sc., 39: 323-334, 2002.") avec un pôle moyen incliné de 80° par rapport à la direction du puits, et des écarts types identiques de 0.1 (dispersion isotrope autour du pôle moyen)

- le grand axe de l'ellipse appartient au plan orthogonal au puits.

Les calculs numériques fournissent alors $\kappa$=0.174 et r=34.4%.

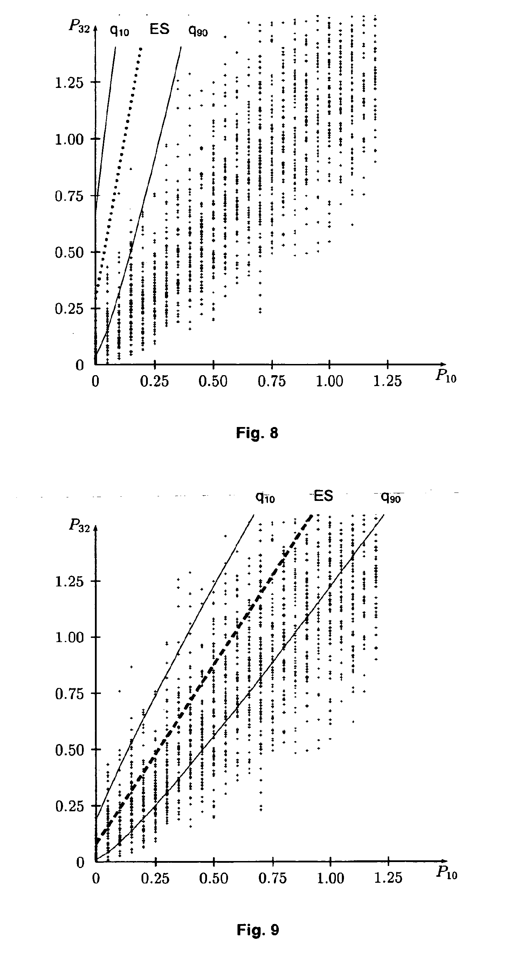

Les figures 8, 9 et 10 représentent la densité $P_{32}$ en fonction de la densité $P_{10}$, les valeurs de densité $P_{32}$ étant issues de calculs sur les réseaux de fractures discrets stochastiques. Ces figures représentent également l'espérance (ES) et les déciles à 10% ($q_{10}$) et 90% ($q_{90}$) de la densité $P_{32}$ en fonction de la densité $P_{10}$. Ces figures correspondent respectivement aux hypothèses suivantes :

1. Figure 8 : on utilise les développements théoriques relatifs à des fractures très grandes devant la taille du puits. On remarque que les résultats théoriques surestiment largement la densité $P_{32}$, car ceux-ci sont fondés sur une hypothèse selon laquelle toutes les traces sont pleines, ce qui n'est pas le cas dans l'exemple choisi.

2. Figure 9 : les résultats théoriques pour calculer l'espérance et les quantiles de $P_{32}$ tiennent compte d'une correction due aux traces partielles, mais en négligeant les traces doubles. On note alors toujours une surestimation de $P_{32}$, car en supposant ainsi que chaque trace provient d'une fracture différente, on augmente à tort le nombre de fractures.

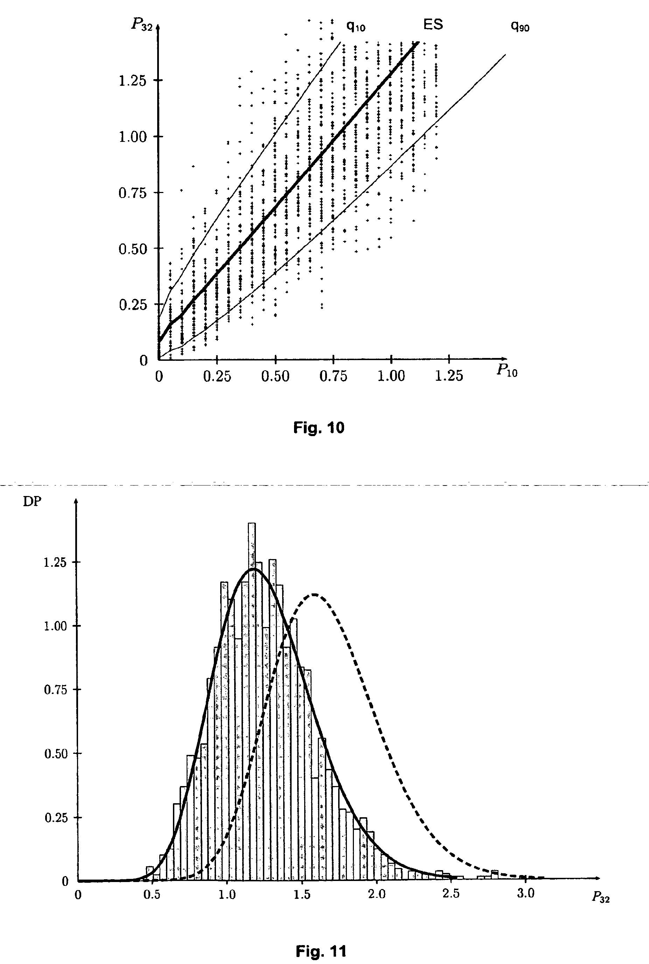

3. Figure 10 : les expressions utilisées pour l'espérance et les quantiles de $P_{32}$ sont celles corrigeant les effets de traces partielles mais aussi de traces doubles. On note alors une bonne correspondance entre l'intervalle de confiance et le nuage de points. On vérifie en particulier que le nombre de points situés à l'intérieur de l'intervalle est proche de 80%. En outre, pour une valeur de $P_{10}$ donnée, on compare à l'histogramme normalisée des réalisations de $P_{32}$ sur la figure 11, les lois de probabilité de $P_{32}$ calculées, l'une en négligeant les traces doubles l'autre en ne les négligeant pas, mais en tenant compte des traces partielles pour les deux. On constate ainsi une bonne correspondance entre les réalisations numériques et la courbe théorique corrigeant les effets de traces doubles. La figure 11 illustre la loi de probabilité de la densité $P_{32}$ sans tenir compte des traces doubles (en pointillés) et avec la correction due aux traces doubles en (trait plein), ainsi que l'histogramme des valeurs de $P_{32}$ issues de tirages de réseaux discrets de fractures correspondant à une valeur donnée de $P_{10}$. L'ordonnée de la figure 11 est la densité de probabilité (DP).

**Application**

On peut utiliser le procédé selon l'invention pour optimiser l'exploitation d'une formation souterraine traversée par un ensemble de fractures et au moins un forage.

Il peut s'agir d'un gisement pétrolier, d'un site de stockage de gaz acides, ou encore d'une formation concernée par des opérations de génie civil.

On peut ainsi utiliser la méthode suivante :

- on construit une diagraphie de densité de fractures tridimensionnelle à laquelle on associe une diagraphie sur l'incertitude de la densité. On utilise pour ce faire le procédé selon l'invention ;

- on construit une carte en trois dimensions de densité tridimensionnelle de fracturation et une carte d'incertitude sur des valeurs de densité de fracturation par une méthode géostatistique: il s'agit d'établir une corrélation entre la carte de densité et des cartes de paramètres explicatifs (distance aux failles, courbures etc.) conditionnée aux puits ("Garcia M., Gouth F. and Gosselin O. Fast and efficient modeling and conditioning of naturally fractured reservoir models using static and dynamic data. SPE Europec/EAGE Conference and Exhibition, Paper 107525. London 2007."),

- à partir de la carte de densité et des incertitudes ainsi que des autres paramètres relatifs au réseau de fractures (orientation, longueur, ouverture, conductivité), on estime les propriétés hydrauliques en tout point du milieu fracturé soit par des méthodes d'estimation analytique soit en générant explicitement un réseau discret de fractures et en calculant les flux entre fractures,

- ces propriétés hydrauliques sont ensuite utilisées dans un simulateur d'écoulement à l'échelle du réservoir ou au voisinage d'un puits, ce qui permet de guider le choix de l'implantation des forages afin d'optimiser l'exploitation de la formation souterraine.

**Avantage du procédé**

Le procédé selon l'invention apporte un gain de temps considérable par rapport à la recherche d'une densité moyenne à partir de tirages de réseaux discrets de fractures selon une méthode de Monte-Carlo. Il se base sur une expression analytique de la loi de probabilité conditionnelle de la densité tridimensionnelle de fractures et de la fonction de répartition correspondante, sachant le nombre de traces observées sur un intervalle d'étude de longueur donnée.

Cette loi de probabilité conditionnelle dépend de facteurs de correction des biais engendrés par l'orientation, la longueur des fractures et les éventuelles traces doubles. D'une part, on déduit aisément de la loi de probabilité la moyenne et l'écart type de la densité, d'autre part, la fonction de répartition permet d'extraire les quantiles (par exemple à 10% et 90%) mesurant l'incertitude sur la valeur de la densité. Ainsi, en plus d'une estimation de la densité de fractures moyenne, le procédé selon l'invention permet de fournir une incertitude en fonction du nombre de traces de fractures observées sur un intervalle de cylindre (puits ou galerie) et de la longueur de cet intervalle.

**Revendications**

**1.** Procédé de construction d'une diagraphie de densité de fractures d'une formation poreuse traversée par un ensemble de fractures et au moins un forage, **caractérisé en ce que** l'on réalise les étapes suivantes :

a) on mesure un nombre *N* d'intersections entre des fractures et ledit forage sur un tronçon du forage de longueur *L* situé à une profondeur *d*, à partir d'observations de la paroi dudit tronçon ;

b) on estime une loi de probabilité conditionnelle de la densité tridimensionnelle de fractures sachant le nombre *N* d'intersections, ladite densité tridimensionnelle de fractures correspondant à une somme de surfaces de fractures par unité de volume ;

c) on détermine une valeur de densité tridimensionnelle de fractures à la profondeur *d*, en calculant la moyenne de ladite loi de probabilité conditionnelle ;

d) on construit une diagraphie de densité tridimensionnelle de fractures, en réitérant les étapes a), b), et c) pour différentes profondeurs.

2. Procédé selon la revendication 1, dans lequel on associe à la diagraphie de densité tridimensionnelle de fractures au moins une diagraphie d'incertitude de densité tridimensionnelle de fractures, en calculant des quantiles de ladite loi de probabilité conditionnelle.

3. Procédé selon l'une des revendications précédentes, dans lequel on estime ladite loi de probabilité conditionnelle, en considérant que lesdites fractures ont des barycentres distribués dans ladite formation selon une loi de Poisson.

4. Procédé selon l'une des revendications précédentes, dans lequel ladite loi de probabilité conditionnelle est exprimée en fonction des paramètres suivants : une loi de probabilité d'un angle défini entre une fracture et ledit forage, le nombre *N* d'intersections et la longueur *L* dudit tronçon.

5. Procédé selon la revendication 4, dans lequel on considère que le forage a une section transverse négligeable par rapport à l'extension des fractures.

6. Procédé selon la revendication 5, dans lequel on estime la loi de probabilité conditionnelle par une loi Gamma de paramètres *N*+1 et $\kappa_o L$, avec $\kappa_o$ la moyenne dudit angle, calculé à partir de ladite loi de probabilité de l'angle.

7. Procédé selon l'une des revendications 1 à 4, dans lequel :

   - on considère que lesdites fractures ont une forme elliptique ;
   - on définit une loi de probabilité de longueur des fractures, et une loi de probabilité de largeur des fractures ;
   - on estime la fonction de probabilité conditionnelle en prenant en compte lesdites lois de probabilité des longueurs et largeurs des fractures, et en considérant que le tronçon de forage considéré est cylindrique.

8. Procédé selon la revendication 7, dans lequel on remplace ledit nombre d'intersections *N* par un nombre d'intersections partielles, correspondant aux fractures ne coupant pas complètement la section transverse du forage.

9. Procédé pour optimiser l'exploitation d'une formation souterraine traversée par un ensemble de fractures et au moins un forage, dans lequel :

   - on construit une diagraphie de densité tridimensionnelle de fractures et au moins une diagraphie d'incertitude de densité tridimensionnelle de fractures, au moyen du procédé selon l'une des revendications 2 à 8 ;
   - on construit une carte en trois dimensions de densité de fracturation et une carte d'incertitude sur des valeurs de densité de fracturation, à partir des diagraphies ; et
   - on optimise l'exploitation de la formation souterraine en tenant compte des cartes de densité et des incertitudes.

**Claims**

1. A method of constructing a fracture density log of a porous formation traversed by a series of fractures and at least one borehole, **characterized in that** it comprises the following stages:

   a) measuring a number N of intersections between fractures and said borehole over a section of the borehole of length L located at a depth d, from observations of the wall of said section,

   b) estimating a conditional probability law of the three-dimensional fracture density knowing the number N of intersections, said three-dimensional fracture density corresponding to a sum of fracture surface areas per volume unit,

   c) determining a three-dimensional fracture density value at depth d by calculating the mean of said conditional probability law,

d) constructing a three-dimensional fracture density log by repeating stages a), b) and c) for different depths.

2. A method as claimed in claim 1, wherein at least one three-dimensional fracture density uncertainty log is associated with the three-dimensional fracture density log by calculating quantiles of said conditional probability law.

3. A method as claimed in any one of the previous claims, wherein said conditional probability law is estimated by considering that said fractures have barycentres distributed in said formation according to a Poisson's law.

4. A method as claimed in any one of the previous claims, wherein said conditional probability law is expressed as a function of the following parameters: a probability law of an angle defined between a fracture and said borehole, the number N of intersections and length L of said section.

5. A method as claimed in claim 4, wherein the borehole is considered to have a negligible cross section in comparison with the extension of the fractures.

6. A method as claimed in claim 5, wherein the conditional probability law is estimated by means of a Gamma law of parameters $N$+1 and $\kappa_o L$, with $\kappa_o$ the mean of said angle calculated from said probability law of the angle.

7. A method as claimed in any one of claims 1 to 4, wherein:

- said fractures are considered to have an elliptical shape,
- a fracture length probability law and a fracture width probability law are defined,
- the conditional probability function is estimated by taking into account said fracture length and width probability laws, and by considering that the borehole section considered is cylindrical.

8. A method as claimed in claim 7, wherein said number N of intersections is replaced by a number of partial intersections corresponding to the fractures that do not completely intersect the cross section of the borehole.

9. A method for optimizing the development of an underground formation traversed by a series of fractures and at least one borehole, comprising:

- constructing a three-dimensional fracture density log and at least one three-dimensional fracture density uncertainty log, by means of the method as claimed in any one of claims 2 to 8,
- constructing a three-dimensional fracture density map and a map of the uncertainties on fracture density values, from the logs, and
- optimizing the development of the underground formation by taking account of the density maps and of the uncertainties.

**Patentansprüche**

1. Verfahren zur Konstruktion einer Bruchdichtemessung einer porösen Formation, die von einer Gruppe von Brüchen und mindestens einem Bohrloch durchquert wird, **dadurch gekennzeichnet, dass** die folgenden Schritte durchgeführt werden:

a) eine Zahl N von Schnittpunkten zwischen den Brüchen und diesem Bohrloch auf einem Abschnitt des Bohrlochs der Länge L in einer Tiefe d wird von Beobachtungen der Wand dieses Abschnitts ausgehend gemessen;
b) ein bedingtes Wahrscheinlichkeitsgesetz der dreidimensionalen Bruchdichte wird anhand der bekannten Zahl N der Schnittpunkte geschätzt, wobei die dreidimensionale Bruchdichte einer Summe der Bruchflächen je Volumeneinheit entspricht;
c) ein Wert der dreidimensionalen Bruchdichte in der Tiefe d wird bestimmt, indem das Mittel dieses bedingten Wahrscheinlichkeitsgesetzes berechnet wird;
d) eine dreidimensionale Bruchdichtemessung wird konstruiert, indem die Schritte a), b) und c) für verschiedene Tiefen wiederholt werden.

2. Verfahren nach Anspruch 1, wobei die dreidimensionale Bruchdichtemessung mindestens mit einer Unsicherheit der dreidimensionalen Bruchdichte verknüpft wird, indem die Quantile des bedingten Wahrscheinlichkeitsgesetzes berechnet werden.

3. Verfahren nach einem der vorherigen Ansprüche, wobei das bedingte Wahrscheinlichkeitsgesetz geschätzt wird, indem davon ausgegangen wird, dass diese Brüche Baryzentren haben, die einem Poissonschen Gesetz gemäß in der Formation verteilt sind.

4. Verfahren nach einem der vorherigen Ansprüche, wobei das bedingte Wahrscheinlichkeitsgesetz in Abhängigkeit von den folgenden Parametern ausgedrückt wird: ein Wahrscheinlichkeitsgesetz eines Winkels, der zwischen einem Bruch und dem Bohrloch gebildet wird, die Zahl N der Schnittpunkte und die Länge L des Abschnittes.

5. Verfahren nach Anspruch 4, wobei davon ausgegangen wird, dass das Bohrloch im Verhältnis zur Ausbreitung der Brüche einen vernachlässigbaren Querschnitt hat.

6. Verfahren nach Anspruch 5, wobei das bedingte Wahrscheinlichkeitsgesetz durch ein Gamma-Gesetz mit den Parametern N+1 und $\chi_0 L$ geschätzt wird, wobei $\chi_0$ das Mittel des Winkels ist, der vom Wahrscheinlichkeitsgesetz des Winkels ausgehend berechnet wird.

7. Verfahren nach einem der Ansprüche 1 bis 4, wobei:

- davon ausgegangen wird, dass die Brüche eine elliptische Form haben;
- ein Wahrscheinlichkeitsgesetz der Länge der Brüche und ein Wahrscheinlichkeitsgesetz der Breite der Brüche definiert wird;
- die bedingte Wahrscheinlichkeitsfunktion geschätzt wird, indem diese Wahrscheinlichkeitsgesetze der Längen und der Breiten der Brüche berücksichtigt werden, wobei davon ausgegangen wird, dass der betreffende Bohrlochabschnitt zylindrisch ist.

8. Verfahren nach Anspruch 7, wobei die Zahl der Schnittpunkte N durch eine Zahl der partiellen Schnittpunkte ersetzt wird, die den Brüchen entspricht, die den Querschnitt des Bohrlochs nicht vollständig schneiden.

9. Verfahren zur Optimierung der Ausbeutung einer unterirdischen Formation, die von einer Gruppe von Brüchen und mindestens einem Bohrloch durchquert wird, wobei:

- mithilfe des Verfahrens nach einem der Ansprüche 2 bis 8 eine dreidimensionale Bruchdichtemessung und mindestens eine Unsicherheit der dreidimensionalen Bruchdichtemessung konstruiert wird;
- von diesen Bohrlochmessungen ausgehend eine dreidimensionale Karte der Bruchdichte und eine Karte der Unsicherheiten der Bruchdichtewerte konstruiert wird; und
- die Ausbeutung der unterirdischen Formation durch Berücksichtigung der Karten der Dichte und Unsicherheiten optimiert wird.

**Fig. 1**

**Fig. 2**

**Fig. 3**

**Fig. 4**

R

TP

T

F

Proj

**Fig. 5**

R

TP

F

T

Proj

**Fig. 6**

**Fig. 7**

Fig. 8

Fig. 9

**Fig. 10**

**Fig. 11**

## RÉFÉRENCES CITÉES DANS LA DESCRIPTION

**Littérature non-brevet citée dans la description**

- **Terzaghi R.D.** Sources of error in joint surveys. *Géotechnique,* vol. 15, 287-304
- **Mauldon, M. ; Mauldon, J. G.** Fracture Sampling on a Cylinder: From Scanlines to Boreholes and Tunnels. *Rock Mech. Rock Engng.,* 1997, vol. 30 (3), 129-144
- **Narr W.** Estimating Average Fracture Spacing in Subsurface Rock. *AAPG Bulletin,* 1996, vol. 90 (10), 1565-1586
- **Starzec P. ; C-F. Tsang.** Use of fracture-intersection density for predicting the volume of unstable blocks in underground openings. *International Journal of Rock Mechanics & Mining Sciences,* 2002, vol. 39, 807-813
- **Marcotte H. ; Henry E.** Automatic joint set clustering using a mixture of bivariate normal distributions. *Int. J. Rock Mech. Min. Sc.,* 2002, vol. 39, 323-334
- **Garcia M. ; Gouth F. ; Gosselin O.** Fast and efficient modeling and conditioning of naturally fractured reservoir models using static and dynamic data. *SPE Europec/EAGE Conference and Exhibition,* 2007